# EUROPÄISCHE PATENTSCHRIFT

(11) **EP 3 569 446 B1**
(45) Veröffentlichungstag und Bekanntmachung des Hinweises auf die Patenterteilung: **24.08.2022**
(21) Anmeldenummer: 19174059.6
(22) Anmeldetag: 13.05.2019
(51) Int. Cl.: B60Q 3/54, B60Q 3/78, B60R 13/00, F21S 41/50, F21S 43/50

(54) **ZIERLEISTE**
DECORATIVE STRIP
LANGUETTE DÉCORATIVE

(30) Priorität: 16.05.2018 AT 504082018
(43) Veröffentlichungstag der Anmeldung: 20.11.2019
(73) Patentinhaber: Pavani, Christoph, 5020 Salzburg (AT)
(72) Erfinder: Pavani, Christoph, 5020 Salzburg (AT)
(74) Vertreter: Babeluk, Michael

(56) Entgegenhaltungen:
- DE-A1- 3 544 217
- DE-A1-102009 035 370
- DE-A1-102012 025 490
- US-A1- 2014 247 595
- US-A1- 2016 230 940
- US-A1- 2016 252 218

## Beschreibung

Die Erfindung betrifft eine Zierleiste, vorzugsweise für Fahrzeuge, mit zumindest einer Leuchte, zumindest einem Trägerband, auf dem die Leuchte angeordnet ist, und mit zumindest einem Oberflächenband, wobei die Leuchte innerhalb des Oberflächenbandes angeordnet ist und das Oberflächenband im Bereich der Leuchte zumindest eine Leuchtenöffnung aufweist.

Derartige Zierleisten werden in vielen Gebieten zur Verschönerung und/oder Beleuchtung verwendet. Insbesondere bei Fahrzeugen wie Personenkraftwägen finden sie in der Fahrzeugkabine und auf der Karosserie Anwendung, aber auch beispielsweise in Wohnräumen oder auf der Außenseite von Gebäuden. Dazu können sie insbesondere bei Fahrzeugen zur besseren Wahrnehmung des Fahrzeugs und der Umgebung beitragen und die Sicherheit dadurch erhöhen.

Dabei ist die Verklebung mit der Anbringfläche besonders vorteilhaft, weil dadurch die Anbringfläche nicht angebohrt oder anders beschädigt werden muss und die Verbindungsart kostengünstig ist.

In der WO 2017/092844 A1 wird eine Leuchtenanordnung beschrieben, wobei Leuchten hinter einer metallischen Oberfläche auf einer Befestigungsplatte angeordnet sind. Die metallische Oberfläche wird durch einen Trägerkörper auf der Befestigungsplatte gehalten. Dadurch kann die Leuchtenanordnung durch Verschraubung oder Verklebung des Trägerkörpers an ein Fahrzeug angebracht werden. Das Licht der Leuchten wird bei Einschalten auf der metallischen Oberfläche gestreut. Nachteilig ist bei dieser Ausführungsform jedoch, dass viel Leuchtkraft durch die Streuung verloren geht und die Stabilität der Leuchtenanordnung sowie die Verbindung der Leuchtenanordnung ungenügend sind. Da Zierleisten oft wiederholt Manipulationen, starken Beschleunigungen und Vibrationen - insbesondere auf Fahrzeugen - ausgesetzt sind, ist dies problematisch.

Die AT 514489 A1 zeigt eine verbesserte Ausführungsform, welche ein reflektierendes Oberflächenband aufweist, das Öffnungen in den Bereichen der Leuchten besitzt. Dadurch kann das Licht der Leuchten direkt aus der Vorrichtung austreten. Jedoch ist auch bei dieser Ausführungsform die mechanische Stabilität mangelhaft.

US 2014/247595 A1 offenbart eine Leuchtenanordnung gemäß des Oberbegriffs von Anspruch 1.

Aufgabe der vorliegenden Erfindung ist damit, eine Zierleiste der oben genannten Art bereitzustellen, die eine verbesserte mechanische Stabilität aufweist.

Dies Aufgabe wird erfindungsgemäß dadurch gelöst, dass das Trägerband zumindest eine erste Klebestelle zur Verbindung mit einer Anbringfläche eines Zielortes aufweist und dass das Oberflächenband zumindest eine zweite Klebestelle zur Verbindung mit der Anbringfläche aufweist.

Durch die zweite Klebestelle wird eine zusätzliche Querverbindung zwischen Oberflächenband und der Anbringfläche hergestellt, welche diese Teile fest miteinander verbindet. Gleichzeitig wird aber dadurch auch die Gesamtstabilität der Zierleiste verbessert, da so Oberflächenband und Trägerband über die Anbringfläche indirekt verbunden sind. Diese duale Wirkung führt zu einer besonders stabilen und kompakten Ausführungsform, die auch gegen Beschleunigungs- und Vibrationsbelastungen beständig ist.

Die Leuchtenöffnung kann vorzugsweise auf die Größe der Leuchte abgestimmt sein, sodass die Licht abgebenden Bereiche der Leuchte vollständig freigelassen werden, aber nicht mehr des Tragbandes freigegeben wird. Eine Leuchtöffnung kann auch größer ausgeführt sein und mehrere Leuchten freigeben.

Besonders vorteilhaft ist, wenn das Oberflächenband zumindest eine Stirnseite aufweist, auf der die zweite Klebestelle angeordnet ist. Damit kann nicht nur eine geeignete Verbindung mit dem Anbringfläche ermöglicht werden, sondern gleichzeitig auch das Trägerband seitlich von dem Oberflächenband überragt werden. Damit kann das optisch meist nicht ansprechende Trägerband überdeckt werden und die optische Erscheinung verbessert werden. Die Stirnseite ist vorzugsweise länglich ausgeführt und/oder erstreckt sich im Wesentlichen über die gesamte Länge der Zierzeile. Somit ist die Verbindungsfläche besonders groß und die Verbindung damit besonders stark.

Vorzugsweise sind zwei Stirnflächen an zwei gegenüberliegenden Seiten, besonders vorzugsweise den Längsseiten des Oberflächenbandes vorgesehen. Damit kann das Trägerband besonders weit überdeckt werden und eine besonders gute Verbindung wird ermöglicht, da so an beiden Seiten des Trägerbandes eine Klebeverbindung eingegangen wird.

Die Leuchtenöffnung gibt vorzugsweise die Leuchte in senkrechter Richtung zur Bandebene zur Gänze frei.

Weiters kann vorgesehen sein, dass zumindest die erste oder die zweite Klebestelle als Klebestreifen ausgeführt ist. Insbesondere bei länglichen Ausführungen der Klebestellen, entlang der Zierleistenlänge ist dies vorteilhaft.

Es kann vorgesehen sein, dass das Trägerband und das Oberflächenband über zumindest eine dritte Klebestelle verbunden sind. Dadurch wird eine stabile Querverbindung zwischen dem Oberflächenband und dem Trägerband ermöglicht.

Weiters kann vorgesehen sein, dass zumindest die stromleitenden Teile der Leuchte vom Trägerband ummantelt werden. Dadurch werden die elektrischen Kontakte vor Nässe und anderen äußeren Einflüssen geschützt. Die Versorgungsleitungen oder Versorgungsplatinen der Leuchte kann innerhalb des Trägerbandes verlaufen.

Besonders vorteilhaft ist, wenn das Trägerband und das Oberflächenband über eine formschlüssige Verbindung, vorzugsweise eine Klemmverbindung verbunden ist. Dabei ist unter Klemmverbindung gemeint, dass sich bei der Herstellung der Verbindung des Oberflächenbandes und des Trägerbandes zumindest ein Teil zumindest eines der Bänder elastisch verbiegt, damit eine formschlüssige Verbindung erreicht wird oder gelöst wird. Bei Verbindung der Bänder wird also zumindest eines soweit elastisch verbogen oder gedehnt, dass sie in die formschlüssige Konstellation bringbar sind in der es vorzugsweise wieder zu einer zumindest teilweisen Entspannung kommt. Dazu können beispielsweise Halteelemente wie Halteschultern vorgesehen sein, welche ausreichende Elastizität besitzen, sich während des Klemmvorgangs entsprechend zu verbiegen, gleichzeitig aber genügend formstabil sind, dass ein ungewolltes Verlassen der formschlüssigen Stellung verhindert wird.

Dabei kann vorgesehen sein, dass bei Zusammenbau und Anbringen der Zierleiste zuerst das Trägerband an die Anbringfläche angeklebt und gegebenenfalls weiter verbunden wird, beispielsweise verschraubt wird. In einem zweiten Schritt wird das Oberflächenband mit dem montierten Trägerband verbunden, vorzugsweise aufgeklemmt, und dabei oder darauf folgend mit der Anbringfläche über die zweite Klebestelle ebenso verklebt und gegebenenfalls weiter befestigt.

In einer bevorzugten Ausführungsform ist vorgesehen, dass sowohl das Oberflächenband als auch das Trägerband elastisch ausgeführt sind. Besonders vorzugsweise ist die gesamte Zierleiste im Wesentlichen elastisch ausgeführt. Dadurch kann die Zierleiste an verschiedene Anbringflächen angepasst werden. Insbesondere wegen der stark unterschiedlichen Formen beim Karosseriebau von Fahrzeugen ist dies vorteilhaft.

Weiters ist vorteilhaft, wenn das Oberflächenband eine Zierschicht aufweist, welche vorzugsweise als Chromfolie ausgeführt ist. Dies verbessert die optische Wahrnehmung der Zierzeile. Vorzugsweise ist sie auf einer Außenfläche des Oberflächenbandes angeordnet. Alternativ kann auch eine andere optisch ansprechende Oberfläche gewählt werden, beispielsweise metallbeschichtete Oberflächen wie verchromte Oberflächen oder Aluminiumflächen, farbige oder gemusterte Oberflächen oder Überzüge.

In diesem Sinne ist auch vorteilhaft, wenn das Oberflächenband eine im Wesentlichen transparente Schutzschicht zum Schutz der Zierschicht aufweist. Damit kann die Chromfolie von äußeren Einflüssen geschützt werden. Sie ist vorzugsweise so ausgeführt, dass die optische Wahrnehmung nicht wesentlich durch sie verschlechtert wird. Ist keine Zierschicht vorgesehen, so kann trotzdem eine Schutzschicht auf dem Oberflächenband vorgesehen werden, um diese zu schützen. Die Schutzschicht kann beispielsweise aus Silikon, Polyurethan, 2-Komponentenkleber bestehen. Es können auch mehr als eine Schutzschicht gegebenenfalls unterschiedlicher Materialien und Eigenschaften vorgesehen sein, welche gegebenenfalls auch an unterschiedlichen Teilen des Oberflächenbandes angeordnet sind. Die Schutzschicht ist vorzugsweise auf dem Oberflächenband aufgegossen.

Besonders vorteilhaft ist auch, wenn in der Leuchtenöffnung ein zumindest teilweise transparentes Schmuckelement angeordnet ist. Dieses Schmuckelement kann die gesamte Leuchte überdecken, bzw. kann sie auch die Größe der gesamten Leuchtenöffnung besitzen. Es kann beispielsweise als vorzugsweise in Facetten geschliffenes und/oder poliertes Glas- oder Kristallelement, als Edelstein oder Diamant ausgeführt sein und dient der optischen Aufwertung und Lichtverteilung.

Das Schmuckelement ist vorzugsweise in die Leuchtenöffnung eingeklebt. Alternativ oder zusätzlich kann das Schmuckelement auch eingeklopft werden. Dazu kann eine vorzugsweise eingefräste Verbindungsoberfläche vorgesehen sein, an die das Schmuckelement angedrückt wird. In einer besonders bevorzugten Ausführungsform wird das Schmuckelement in eine Fassung der Leuchtenöffnung eingefasst. Weist die Leuchtenöffnung einen Rand mit einer dafür vorgesehenen Vertiefung zur Aufnahme des Schmuckelements auf, so wird die Leuchtenöffnung durch Hineindrücken leicht aufgebogen, das Schmuckelement "eingeklipst" und somit formschlüssig eingefasst.

Das Schmuckelement kann verschiedenste Formen aufweisen, es kann an die Form der Leuchtenöffnung angepasst sein oder auch eine andere Form wie eine Sternform, Herzform oder ähnliches besitzen, während die Leuchtenöffnung beispielsweise rund ausgeführt wird.

Die Schutzschicht kann sich auch nur über einen Teil des Oberflächenbandes erstrecken. Beispielsweise kann eine Schutzschicht nur im Bereich der Schmucksteine angeordnet sein und diese vorzugsweise vollständig überdecken. Alternativ kann sich die Schutzschicht den Schmuckstein herum erstrecken, zumindest einen Teil des Schmucksteins jedoch drei von einer Schutzschicht lassen. Weiter kann dich Schutzschicht die Bereiche der Schmucksteine vollkommen frei lassen.

Wird die Zierleiste an oder in einem Fahrzeug verwendet, kann es vorteilhaft sein, wenn vorgesehen ist, dass die Zierleiste zumindest eine Stromversorgungsleitung der Leuchte aufweist, welche mit der Energiequelle von Begrenzungsleuchten des Fahrzeugs verbindbar sind. Dadurch kann die Leuchte zusammen mit den Begrenzungsleuchten geschalten werden, wenn sie in ein Fahrzeug eingebaut ist. Dadurch ist ein zusätzliches Einschalten nicht mehr notwendig. Die Zierleiste kann bei entsprechender Ausführung auch in Kombination mit anderen Leuchten des Fahrzeugs, wie Tagfahrleuchten, Seitenmarkierungsleuchten oder Schlussleuchten geschalten werden. Sie können auch als Ersatz der Leuchten dienen, bzw. können diese Leuchten als eine beschriebene Zierleiste ausgeführt sein. Dazu kann die Stromversorgungsleitung mit der Energiequelle der entsprechenden Leuchten verbunden sein.

In der Folge wird die Erfindung anhand der in den Figuren dargestellten, nicht einschränkenden Ausführungsformen näher erläutert. Es zeigen:
- Fig. 1: einen Schnitt durch eine erfindungsgemäße erste Ausführungsform einer Zierleiste;
- Fig. 2: eine schematische Seitenansicht einer erfindungsgemäßen zweiten Ausführungsform einer Zierleiste.

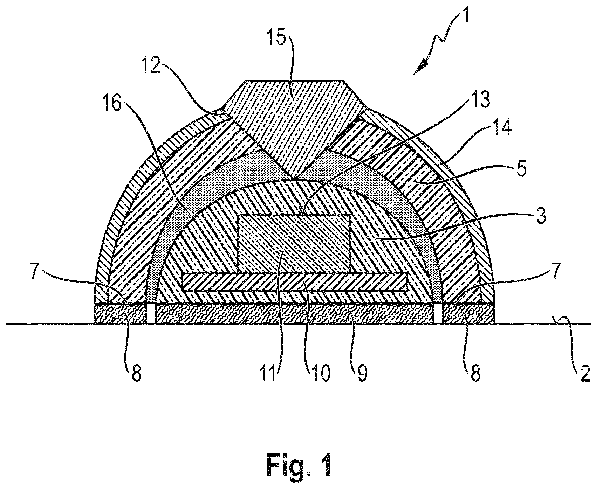

Die Fig. 1 zeigt eine erste Ausführungsform einer länglichen Zierleiste 1, welche in einer Einbaustellung an einer Anbringfläche 2 festklebt angeordnet ist. Ein Trägerband 3 weist eine längliche, profilierte Form auf, die einen im Wesentlichen halbrunden Querschnitt aufweist.

Oberhalb des Trägerbands 3 ist ein Oberflächenband 5 angeordnet, welches wie das Trägerband 3 länglich ausgeführt ist, aber ein gewölbtes Profil besitzt, wobei dem Trägerband 3 zugewandt eine Ausnehmung vorgesehen ist, in welcher das Trägerband 3 angeordnet ist. Dabei wird unter "oberhalb" oder "unterhalb" von der Anbringfläche 2 aus gesehen verstanden, also in diesem Fall ist unter "oberhalb des Trägerbandes 3" auf der von der Anbringfläche 2 abgewandten Seite des Trägerbands 3 gemeint. Die Form der Ausnehmung und halbrunde Form des Trägerbandes 3 sind aufeinander abgestimmt, sodass das Trägerband 3 an der der Ausnehmung zugewandten Fläche vorzugsweise flächig verklebt werden kann, falls gewünscht.

Auf der der Anbringfläche 2 zugewandten Seite des Oberflächenbandes 5 weist dieses an beiden Breitseiten je eine Stirnseite 7 auf, an denen je eine sich über die gesamte Länge und Breite der Stirnseite 7 erstreckende zweite Klebestelle 8 angeordnet sind. Diese zweite Klebestellen 8 sind als Klebestreifen ausgeführt, die eine Verbindung zur Anbringfläche 2 aufbauen.

Das Trägerband 3 weist ebenso an der der Anbringfläche 2 zugewandten Seite eine Klebefläche mit einer als Klebestreifen ausgeführten ersten Klebestelle 9 auf, die sich über die gesamte Länge und Breite der der Anbringfläche 2 zugewandten Seite des Trägerbandes 3 erstreckt. Das Trägerband 3 weist in seinem Inneren eine Versorgungsplatine 10 auf, auf der mehrere, LED-Elemente als Leuchten 11 angeordnet sind und diese mit Strom versorgt. Damit sind die Versorgungsplatine 10 und die die Leuchten 11 vor Nässe und anderen schädigenden äußeren Einflüssen durch das Trägerband 3 geschützt. Das Trägerband 3 ist zumindest im Bereich oberhalb der Leuchten transparent ausgeführt, sodass das Licht der Leuchten durch dieses aus Leuchtenöffnungen 12 austreten kann.

Es kann zuerst die erste Klebestelle 9 mit der Anbringfläche 2 verbunden werden, und danach das Oberflächenband 5 aufgesetzt werden. Durch das Aufsetzen werden auch automatisch die zweiten Klebestellen 8 an den richtigen Stellen mit dem Anbringfläche 2 verbunden. Somit ergibt sich eine kompakte Ausführung der Zierleiste, da die Bänder 3, 5 direkt und indirekt miteinander in Verbindung stehen, sowie gleichzeitig eine sehr stabile Verbindung zur Anbringfläche 2.

Das Oberflächenband 5 weist im Bereich jeder Leuchte 11 je eine Leuchtenöffnung 12 auf, welche um etwa 10% größer ausgeführt ist als eine Lichthauptabgabefläche 13 der gleich aufgebauten Leuchten 11 und ebenso wie diese eine runde Form hat. Sie sind direkt über den jeweiligen Lichthauptabgabeflächen 13 angeordnet und ermöglichen damit einen Lichtdurchtritt direkt nach außen, und weg von der Anbringfläche 2. In den Leuchtenöffnungen 12 sind je ein Schmuckelement 15 in Form eines geschliffenen Glaskristalls über einen Klebefilm 16 eingeklebt, welche durch die darunter angeordneten Leuchten 11 beleuchtet werden und das Licht in verschiedene Richtungen in den Außenraum außerhalb der Zierleiste verteilen. Dabei ragt das Schmuckelement 15 ab seiner breitesten Stelle über die Leuchtenöffnungen 12 hinaus. Damit liegt der gesamte Unterteil des mit Brillantschliff ausgeführten Schmuckelements 15, also der Teil von Rundiste bis Kalette des Schmuckelements 15, im Inneren des Oberflächenbandes 5 und damit im Inneren der Zierleiste 1, während sich der Oberteil außerhalb befindet. Der Klebefilm 16 ist vorzugsweise aus hochtransparenten Klebstoff, welcher sich über die Verbindungsstelle zwischen Oberflächenband 5 und Schmuckelement 15 hinaus erstreckt. In der gezeigten Ausführungsform erstreckt sie sich über die gesamte Oberfläche der Ausnehmung des Oberflächenbandes 5 und kann daher als Verbindungsfläche für das Trägerband 3 dienen. Dabei wird der Klebefilm 16 vorzugsweise ausgehärtet, bevor er mit dem Trägerband 3 in Verbindung kommt, damit er nicht mit dieser verklebt. So kann eine leicht lösbare Verbindung zwischen Trägerband 3 und Oberflächenband 5 erreicht werden und die Bänder 3, 5 bei Bedarf zur Wartung oder Austausch voneinander gelöst werden.

Das Oberflächenband 5 weist eine als Chromfolie ausgeführte Zierschicht 14 auf, welche an der Außenseite angeordnet ist, und die gesamte, von außen sichtbare Fläche des Oberflächenbandes 5 überdeckt. Nur die Leuchtöffnungen 12 reichen auch durch die Zierschicht 14. Vorzugsweise ist ober der Zierschicht 14, also auf der vom Oberflächenband 5 wegzeigenden Seite eine Schutzschicht angeordnet.

Sowohl Oberflächenband 5 inklusive der Versorgungsplatine 10, als auch Trägerband 3 sind hauptsächlich aus elastischem Kunststoff gefertigt, wodurch sie auch auf unebenen Anbringflächen 2 angebracht werden können.

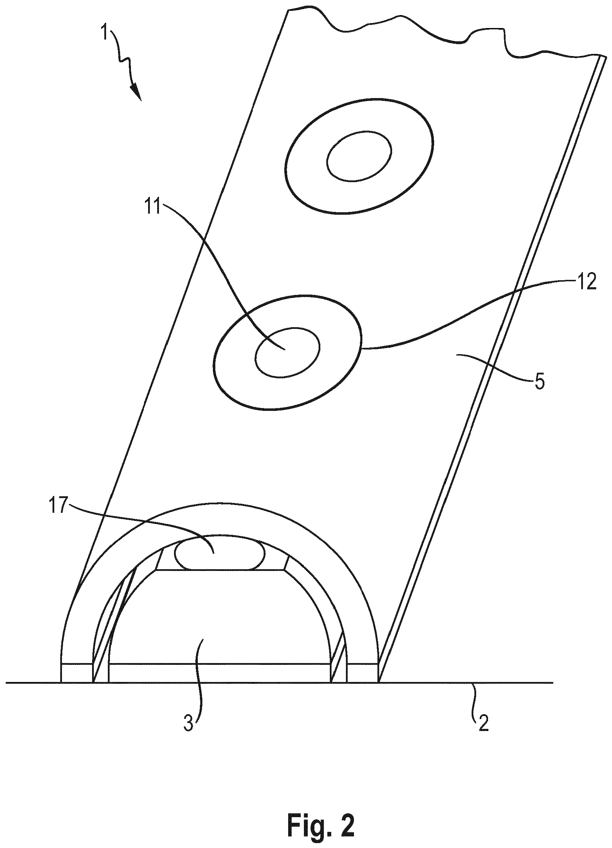

In Fig. 2 wird eine zweite Ausführungsform dargestellt, welche im Wesentlichen den gleichen Aufbau wie die erste Ausführungsform besitzt, jedoch keine eingesetzten Schmuckelemente 15 aufweist. Eine derartige Ausführungsform ist insbesondere bei Fahrzeugen wie PKWs vorteilhaft. Damit stehen die Leuchten 11 direkt in Kontakt nach außen. An den Enden der Zierleiste sind zwischen dem Trägerband 3 und dem Oberflächenband 5 als Verklebungspunkte ausgeführte dritte Klebestellen 17 angeordnet, welche eine weitere Verbindung zwischen diesen Bändern 3, 5 herstellt. Dabei kann vorgesehen sein, dass die Lichthauptabgabeflächen 13 der Leuchten 11 auf gleicher Höhe mit der Außenseite des Oberflächenbandes 5 liegen, sie sich also bündig zueinander verhalten. Alternativ kann auch vorgesehen sein, dass die Lichthauptabgabeflächen 13 über das Oberflächenband 5 hinausragen.

## Patentansprüche

1. Zierleiste (1), vorzugsweise für Fahrzeuge, mit zumindest einer Leuchte (11), zumindest einem Trägerband (3), auf dem die Leuchte (11) angeordnet ist, und mit zumindest einem Oberflächenband (5), wobei die Leuchte (11) innerhalb des Oberflächenbandes (5) angeordnet ist und das Oberflächenband (5) im Bereich der Leuchte (11) zumindest eine Leuchtenöffnung (12) aufweist, wobei das Trägerband (3) zumindest eine erste Klebestelle (9) zur Verbindung mit einer Anbringfläche (2) eines Zielortes aufweist , **dadurch gekennzeichnet, dass** das Oberflächenband (5) zumindest eine zweite Klebestelle (8) zur Verbindung mit der Anbringfläche (2) aufweist.

2. Zierleiste (1) nach Anspruch 1, **dadurch gekennzeichnet, dass** das Oberflächenband (5) zumindest eine Stirnseite (7) aufweist, auf der die zweite Klebestelle (8) angeordnet ist.

3. Zierleiste (1) nach Anspruch 1 oder 2, **dadurch gekennzeichnet, dass** zumindest die erste Klebestelle (9) oder die zweite Klebestelle (8) als Klebestreifen ausgeführt ist.

4. Zierleiste (1) nach einem der Ansprüche 1 bis 3, **dadurch gekennzeichnet, dass** das Trägerband (3) und das Oberflächenband (5) über zumindest eine dritte Klebestelle (17) verbunden sind.

5. Zierleiste (1) nach einem der Ansprüche 1 bis 4, **dadurch gekennzeichnet, dass** zumindest die stromleitenden Teile der Leuchte (11) vom Trägerband (3) ummantelt werden.

6. Zierleiste (1) nach einem der Ansprüche 1 bis 5, **dadurch gekennzeichnet, dass** sowohl das Oberflächenband (5) als auch das Trägerband (3) elastisch ausgeführt sind.

7. Zierleiste (1) nach einem der Ansprüche 1 bis 6, **dadurch gekennzeichnet, dass** das Oberflächenband (5) eine Zierschicht (14) aufweist, welche vorzugsweise als Chromfolie ausgeführt ist.

8. Zierleiste (1) nach Anspruch 7, **dadurch gekennzeichnet, dass** das Oberflächenband (5) eine im Wesentlichen transparente Schutzschicht zum Schutz der Zierschicht (14) aufweist.

9. Zierleiste (1) nach einem der Ansprüche 1 bis 8, **dadurch gekennzeichnet, dass** in der Leuchtenöffnung (12) ein zumindest teilweise transparentes Schmuckelement (15) angeordnet ist.

10. Zierleiste (1) nach einem der Ansprüche 1 bis 9, **dadurch gekennzeichnet, dass** die Zierleiste (1) zumindest eine Stromversorgungsleitung der Leuchte (11) aufweist, welche mit der Energiequelle von Begrenzungsleuchten des Fahrzeugs verbindbar sind.

## Claims

1. Decorative strip (1), preferably for vehicles, having at least one light (11), at least one carrier strip (3), on which the light (11) is arranged, and having at least one surface strip (5), wherein the light (11) is arranged within the surface strip (5) and the surface strip (5) has at least one light opening (12) in the region of the light (11), wherein the carrier strip (3) has at least one first adhesive point (9) for connection with an attachment surface (2) of a target location, **characterised in that** the surface strip (5) has at least one second adhesive point (8) for connection with the attachment surface (2).

2. Decorative strip (1) according to claim 1, **characterised in that** the surface strip (5) has at least one end face (7) on which the second adhesive point (8) is arranged.

3. Decorative strip (1) according to claim 1 or 2, **characterised in that** at least the first adhesive point (9) or the second adhesive point (8) is designed as an adhesive strip.

4. Decorative strip (1) according to one of claims 1 to 3, **characterised in that** the carrier strip (3) and the surface strip (5) are connected via at least one third adhesive point (17).

5. Decorative strip (1) according to one of claims 1 to 4, **characterised in that** at least the current-conducting parts of the light (11) are sheathed by the carrier strip (3).

6. Decorative strip (1) according to one of claims 1 to 5, **characterised in that** both the surface strip (5) and the carrier strip (3) are of elastic design.

7. Decorative strip (1) according to one of claims 1 to 6, **characterised in that** the surface strip (5) has a decorative layer (14), which is preferably in the form of a chrome foil.

8. Decorative strip (1) according to claim 7, **characterised in that** the surface strip (5) has a substantially transparent protective layer for protecting the decorative layer (14).

9. Decorative strip (1) according to one of claims 1 to 8, **characterised in that** an at least partially transparent decorative element (15) is arranged in the light opening (12).

10. Decorative strip (1) according to one of claims 1 to 9, **characterised in that** the decorative strip (1) has at least one power supply line of the light (11), which can be connected to the power source of marker lights of the vehicle.

## Revendications

1. Baguette décorative (1), de préférence pour des véhicules comprenant au moins un feu (11), au moins une bande de support (3) portant le feu (11) ainsi qu'au moins une bande de surface (5),
- le feu (11) étant logé dans la bande de surface (5) et la bande de surface (5) a au moins un orifice de lumière (12) dans la région du feu (11),
la bande de support (3) ayant au moins un premier point de collage (9) pour être reliée à une surface réceptrice (2) d'un emplacement de destination,
baguette **caractérisée en ce que**
la bande de surface (5) comporte au moins un second point de collage (8) pour être reliée à la surface réceptrice (2).

2. Baguette décorative (1) selon la revendication 1,
**caractérisée en ce que**
la bande de surface (5) a au moins une face frontale (7) recevant le second point de collage (8).

3. Baguette décorative (1) selon la revendication 1 ou 2,
**caractérisée en ce que**
au moins le premier point de collage (9) et le second point de collage (8) sont réalisés par des bandes adhésives.

4. Baguette décorative (1) selon les revendications 1 à 3,
**caractérisée en ce que**
la bande de support (3) et la bande de surface (5) sont reliées par au moins un troisième point de collage (17).

5. Baguette décorative (1) selon les revendications 1 à 4,
**caractérisée en ce que**
au moins les parties conductrices électriques du feu (11) sont enveloppées par la bande de support (3).

6. Baguette décorative (1) selon les revendications 1 à 5,
**caractérisée en ce que**
à la fois la bande de surface (5) et la bande de support (3) sont élastiques.

7. Baguette décorative (1) selon les revendications 1 à 6,
**caractérisée en ce que**
la bande de surface (5) a une couche décorative (14) qui est de préférence un film chromé.

8. Baguette décorative (1) selon la revendication 7,
**caractérisée en ce que**
la bande de surface (5) comporte une couche protectrice essentiellement transparente pour protéger la couche décorative (14).

9. Baguette décorative (1) selon l'une des revendications 1 à 8, **caractérisée en ce que**
un élément décoratif (15) au moins partiellement transparent est placé dans l'orifice de lumière (12).

10. Baguette décorative (1) selon les revendications 1 à 9,
**caractérisée en ce que**
la baguette décorative (1) comporte au moins une ligne d'alimentation électrique du feu (11) qui peut être reliée à la source d'alimentation des feux de gabarit du véhicule.
